# EUROPEAN PATENT APPLICATION

(11) **EP 1 973 042 A1**
(43) Date of publication of application: **24.09.2008**
(21) Application number: 06828399.3
(22) Date of filing: 19.12.2006
(51) Int. Cl.: G06F 17/21

(54) **METHOD FOR DISPLAYING THE DOCUMENT**

(30) Priority: 20.12.2005 CN 200510132638
(71) Applicant: Wuxi Evermore Software, Inc, Wuxi City, Jiangsu Province 214028 (CN)
(72) Inventor: XU, Liang, Jiangsu 214028 (CN); RONG, Mingjun, Jiangsu 214028 (CN)
(74) Representative: Price, Nigel John King
(86) International application number: PCT/CN2006/003491
(87) International publication number: WO 2007/071182

(57) **Abstract**

The present invention relates to a method for displaying documents. The method executes the following steps: after a word processing process receives a command for projecting a view, a status of full screen is entered; the word processing process adjusts a view scaling in accordance with resolution of a display device; the word processing process divides a document into a plurality of projecting pages in accordance with the resolution of the display device and the view scaling; the word processing process displays the projecting pages on full screen. The technical solution of the present invention accomplishes a new view mode, when the document is displayed, the scaling is adjusted automatically to make the document is suitable with the display device and display the document contents on full screen. When the document is displayed on full screen, the typesetting manner between the words and the objects, such as pictures, tables and so on, which is in the document is preserved. And there are convenient functions, such as navigating, drawing and so on.

## Description

### FIELD OF THE TECHNOLOGY

The present invention relates to a method for displaying documents, in particular to a method for displaying the documents content on full screen.

### BACKGROUND OF THE INVENTION

In order to satisfy the subscribers' requirements to consult and edit the documents in different conditions, conventional word processing software, in accordance with subscribers' using habit and convenience, generally provides some view displaying functions, such as a page view, an outline view, a common view and so on. In some cases, such as making a report or lecturing, there is a need for magnifying and displaying the content of documents on full screen so as to enable audiences to see the content clearly. The general word processing software provides the function of "full screen", but when this function is used, some problems exist as follows. The word processing software can not set automatically the view scaling and the view displaying way to suit the full screen windows, which causes that the subscriber is still required to manually adjust the displaying proportion so as to magnify the words to be displayed. For example, when the view mode of file displaying is page and the displaying proportion is 100%, after the subscribe clicks to project on full screen, the displaying proportion is still 100% and some view elements, such as a menu or a scroll bar, which is beyond the document may be displayed.

Although this problem can be solved by the way of using slides making software directly to produce the content of the report or lecture and then projecting the slides, people is often used to writing the report or the lecture in the word processing software. If they are needed to be transferred into the slides, there is a need for coping and pasting repeated, and lots of time will be wasted to typeset.

### SUMMARY OF THE INVENTION

The object of the present invention is to provide a method for displaying documents, which is aimed at the deficiencies existing in the prior art. In the word process, the method is used for automatically adjusting the scaling and displaying the document content on full screen, and has some convenient functions, such as navigating, drawing and so on.

In order to accomplish the above object, the present invention provides a method for displaying documents. The method executes the following steps:

step1, after a word processing process receives a command for projecting a view, a status of full screen is entered;

step2, said word processing process adjusts a view scaling in accordance with resolution of a display device;

step3, said word processing process divides a document into a plurality of projecting pages in accordance with the resolution of the display device and the view scaling;

step4, said word processing process displays the projecting pages on full screen.

In the case of entering into the status of full screen, said word processing process hides a menu bar, a tool bar, a scroll bar and a status bar. When the projecting pages are displayed, said word processing process starts a navigating subroutine and displays a projecting navigating bar on the screen. Said navigating subroutine includes a forward module, a backward module and a drawing pen module. After said navigating subroutine receives an external triggering command for going forward, backing off or drawing pen, it starts the corresponding function module to run.

Said word processing process also includes a fast navigating module. When said word processing process receives a fast navigating triggering command, it starts a fast navigating subroutine. The fast navigating subroutine generates automatically a menu command linked to the projecting pages and displays a fast navigating menu. A corresponding projecting page appears when the fast navigating subroutine receives a jumping command. Said fast navigating subroutine may automatically generate the menu command linked to each projecting page, it also may automatically generate the menu command linked to the projecting page in which a document title is located.

The technical solution of the present invention accomplishes a new view mode. When the document is displayed, the scaling is adjusted automatically to make the document is suitable with the display device and display the document contents on full screen. When the document is displayed on full screen, the typesetting manner between the words and the objects, such as pictures, tables and so on, which is in the document is preserved. And there are convenient functions, such as navigating, drawing and so on.

The present invention is further detailed in conjunction with the accompanying drawings and embodiments.

### BRIEF DESCRIPTION OF THE DRAWINGS

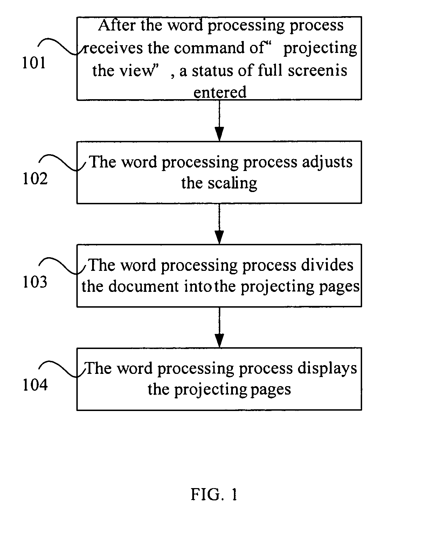

Fig.1 is a flow chart of the method for displaying documents according to the present invention.

### DETAILED DESCRIPTION OF THE PREFERRED EMBODIMENTS

The present invention provides a method for displaying documents, which directly provides views similar to the slides projecting, and the status of full screen can be directly entered to look over the documents content. And the method also provides the functions for going forward, backing off, drawing pen and so on.

Referring to Fig.1, it is a flow chart of the method for displaying documents according to the present invention. The method executes the following steps:

step101, after a word processing process receives a command for projecting a view, a status of full screen is entered;

step102, the word processing process adjusts a view scaling; the view size is adapted to the screen size, and the size is adjusted to be different according to the different screens resolution, of which the basis is to display the words contents of the entire page;

When the words is typeset transversely, the scaling = the screen width / (the sheet width - the left margin - the right margin - the width of the binding line), that is, the scaling = the screen width / the words width. When the words is typeset vertically, the scaling = the screen height / (the sheet height - the top margin - the bottom margin - the height of the binding line), that is, the scaling = the screen height / the words height. For example, the resolution of a display device is 1024*768, and a system setting is a small character in 96 pixel/inch, wherein 1 inch = 72 points, then the screen size may be transformed as 768*576 points; in the page setting, the sheet size is A4, the left margin is 90 points, the right margin is 90 points, and the sheet width is 595.35, then the scaling may be calculated as 768/(595.35-(90+90))=1.85 after entering the projecting view, and the word processing process will automatically adjust the scaling as 185% in accordance with the screen size after entering the projecting mode. Therefore, when projecting, there are not blank regions presented at two sides of the screen, so that the document can be displayed completely.

step 103, the word processing process divides the document in accordance with the resolution of the display device and the view scaling to make the entire document be divided into a plurality of projecting pages;

The document generally consists of a plurality of pages, and the pages herein mentioned mean the pages which are automatically separated in accordance with the sheet type and the page setting when the document is edited. In accordance with the resolution of the display device, the document is divided into a plurality of projecting pages. Because the displaying scaling of the projecting view is large, there is no page margin during displaying, and the length-width ratio of the projecting page is same as the screen of the display device. Therefore, when it is divided, the document is taken as a whole, and it is divided in accordance with the resolution of the display device and the view scaling. Thereby the contents of one page may be displayed in the plurality of projecting pages, and the displayed contents of one projecting page may be come from the plurality of pages. During the procedure of dividing, the projecting page still preserves the typesetting manner between the words and the objects, such as pictures, tables and so on, which is in the original document.

step104, the word processing process displays each projecting page on full screen.

The present embodiment accomplishes displaying the document contents by the projecting views, and automatically dividing the document content into the projecting views to enable the subscriber to project the document content in the way of slide without making the slides. The page margin is not displayed when projecting, and the scaling can be adjusted automatically in accordance with the display device, so as to enable the subscriber to enlarge the displayed content without adjusting the scaling manually.

When the subscriber applies the document to make a report or lecture, he often does not need a menu operation in the document editing and the operation in the tool bar. In addition, each projecting page is formed from being divided in accordance with the resolution of the display device, so the size of the projecting page is suitable for being displayed on the screen, Therefore, when entering the status of full screen, the word processing process hides the menu bar, the tool bar, the horizontal and vertical scroll bar and the status bar. There is only the document content in each projecting page and does not include contents, such as the menu bar, the tool bar and so on, so as to can enlarge the document displaying area.

In another embodiment of the present invention, for the convenience of the subscriber's operation, the present embodiment further provides a projecting navigating bar. When the subscriber clicks buttons on the navigating bar, the corresponding operations can be executed. Under the mode of the "projecting view", the word processing process starts a navigating subroutine to display the projecting navigating bar on the screen. For example, the projecting navigating bar is displayed at the bottom-left corner of the screen in the way of semitransparent. The "projecting navigating bar" provides the buttons of "backward" and "forward". When the navigating subroutine receives an external triggering command, for example, when the subscriber clicks a certain button, the navigating subroutine automatically executes the corresponding function module. When the button of the "backward" is clicked, the previous projecting page is displayed automatically, and when the button of the "forward" is clicked, the next projecting page is displayed automatically.

In another embodiment of the present invention, when the projecting page is displayed, a button of "drawing pen" is displayed to convenient for the subscriber signed in the projecting view. When the button of the "drawing pen" is clicked, the word processing process starts a drawing subroutine to enter the status of drawing manually.

When the subscriber is under the mode of the projecting views, a fast navigating function may be provided in the projecting view, which can enable the subscriber to fast jump into a given projecting page conveniently. When the projecting page is displayed, the word processing process starts a fast navigating subroutine to display the button of "fast navigating" and automatically generate a linking command of each projecting page. When the button of the "fast navigating" is clicked, the menu of the fast navigating is popped up, and the subscriber can accomplish to automatically jump into the projecting page in which the title is located through clicking the menu items.

The document generally includes a plurality of chapters, when the subscriber uses the projecting views to lecture or make a report, sometimes he wants to directly jump to a certain chapter. The word processing process automatically generates a linking command to the projecting page in which the title is located according to the title. After the button of the "fast navigation" is clicked, the fast navigating menu including title items is popped up, and each of the title items is corresponding to the linking command for correspondingly jumping to the corresponding projecting page. After the subscriber chooses a certain title, the word processing process automatically displays the projecting page in which the title is located.

For the subscriber's using conveniently, the word processing process also includes a plurality of shortcut key functions. When the subscriber operates by a keyboard or a mouse, the word processing process can execute the corresponding operations in accordance with the subscriber's operations. When the words processing process receives the mouse clicking occurrence, the next projecting page is displayed. When a prescribed key pressing occurrence is received, for example, when the ESC key is pressed, the projecting view is quitted to back into the preceding view. When the word processing process receives a scrolling occurrence of the mouse roller, the projecting page is displayed with a prescribed increment in accordance with the scrolling direction of the mouse roller. The projecting page is generated dynamically, and it is moved with a fixed increment (e.g. 1/3 inch). When the word processing process receives the scrolling occurrence of the mouse roller, a sequence of the projecting pages behind the current projecting page is re-generated in accordance with the scrolling direction and range of the mouse roller. When the sequence of the projecting pages is generated, the direction of the words is needed to be distinguished. For example, the direction of the words is transverse, the conclusion that the projecting page should be moved backward 1 inch can be obtained by analyzing the scrolling direction and range of the mouse, and then the number of the words lines corresponding to the moved 1 inch is calculated, and these lines are taken as one dividing point for the document to generate the projecting pages before and behind the dividing point.

Under the mode of the projecting views, in order to be convenient for projecting, it is to be set that the mouse is clicked to make the screen jump into the next screen. In order to display more contents, the cursor and most menu tool bars are invisible. Thus under the mode of the projecting views, the document content only can be consult, but it can not be edited.

The function of the projecting views may be further expanded, for example to provide the background music, set the cartoon effect for objects and so on.

The present invention provides a new view, which is particularly suitable for displaying the document contents of the report, the document contents of the lecture and so on synchronously, making the text size suit the screen size automatically, preserving the typesetting manner between the words and the objects, such as pictures, tables and so on, which is in the document. The present invention provides some convenient functions, such as projecting drawing pen, fast navigating and so on.

Finally, it should be understood that the above embodiments are only used to explain, but not to limit the technical solution of the present invention. In despite of describing the present invention in detail with reference to the preferred embodiments, it should be understood that various modifications, changes or equivalent replacements could be made by an ordinary person skilled in the relevant field without departing from the spirit and scope of the technical solution of the present invention, which should be covered in the extent of the claims of the present invention.

## Claims

1. A method for displaying documents, comprising:
step1, entering a status of full screen displaying after a word processing process receives a command for projecting a view;
step2, said word processing process adjusting a view scaling in accordance with resolution of a display device;
step3, said word processing process dividing a document into a plurality of projecting pages in accordance with the resolution of the display device and the view scaling;
step4, said word processing process displaying the required projecting pages on full screen.

2. The method according to the claim 1, wherein between said step 1 and said step 2, said word processing process hides a menu bar, a tool bar, a scroll bar and a status bar.

3. The method according to the claim 1, wherein after said step 4 , said word processing process starts a navigating subroutine and displays a projecting navigating bar on the screen.

4. The method according to the claim 3, wherein said navigating subroutine comprises a forward module and a backward module; and after said navigating subroutine receives an external triggering command for going forward or backing off, it starts the forward module or the backward module to run.

5. The method according to the claim 3 or 4, wherein said navigating subroutine further comprises a drawing pen module; and after said navigating subroutine receives a drawing pen triggering command, it starts the drawing pen module.

6. The method according to the claim 1, wherein said word processing process further comprises a fast navigating module; after said step 4, said word processing process starts a fast navigating subroutine after it receives a fast navigating triggering command; the fast navigating subroutine generates automatically a menu command linked to the projecting pages and displays a fast navigating menu; and a corresponding projecting page appears when the fast navigating subroutine receives a jumping command.

7. The method according to the claim 6, wherein the step of said fast navigating subroutine generating automatically the menu command linked to the projecting pages concretely comprises: said fast navigating subroutine automatically generates the menu command linked to each projecting page.

8. The method according to the claim 6, wherein the step of said fast navigating subroutine generating automatically the menu command linked to the projecting pages concretely comprises: said fast navigating subroutine generates automatically the menu command linked to the projecting page in which a document title is located.

9. The method according to the claim 1, wherein after said step 4, a next projecting page is displayed after said word processing process receives a mouse clicking occurrence.

10. The method according to the claim 1, wherein after said step 4, after said word processing process receives a predefined key pressing occurrence, the mode of projecting the view is quitted and the document is displayed by entering a view mode which is prior to projecting the view.

11. The method according to the claim 1, wherein after said step 4, the projecting page is displayed with a prescribed increment in accordance with the scrolling direction of the mouse roller after said word processing process receives a scrolling occurrence of a mouse roller.

12. The method according to the claim 11, wherein after said word processing process receives the scrolling occurrence of the mouse roller and before the projecting page is displayed with a prescribed increment, the document is re-divided in accordance with the scrolling direction and range of the mouse roller so as to generate the projecting pages.
